(19) Europäisches Patentamt / European Patent Office / Office européen des brevets

(11) **EP 3 173 597 B1**

(12) **FASCICULE DE BREVET EUROPEEN**

(45) Date de publication et mention
de la délivrance du brevet:
**12.09.2018 Bulletin 2018/37**

(51) Int Cl.:
*F02B 37/00* *(2006.01)*       *F02B 39/12* *(2006.01)*
*F02M 26/05* *(2016.01)*       *F02M 26/34* *(2016.01)*

(21) Numéro de dépôt: **16200631.6**

(22) Date de dépôt: **25.11.2016**

(54) **SYSTÈME MOTEUR AVEC CIRCUIT DE RECIRCULATION DES GAZ BRULÉS**

MOTORSYSTEM MIT EINEM ABGASRÜCKFÜHRUNGSSYSTEM

MOTOR SYSTEM WITH CIRCUIT FOR RECIRCULATING EXHAUST GASES

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **30.11.2015 FR 1561539**

(43) Date de publication de la demande:
**31.05.2017 Bulletin 2017/22**

(73) Titulaire: **Valeo Systemes de Controle Moteur
95800 Cergy Saint Christophe (FR)**

(72) Inventeurs:
• **ANGELOT, Pierre-Julian
78500 SARTROUVILLE (FR)**

• **COPPIN, Thomas
95000 CERGY (FR)**

(74) Mandataire: **Garcia, Christine
Propriété Intellectuelle
Valeo Systèmes de Contrôle Moteur
14, avenue des Béguines
95800 Cergy St Christophe (FR)**

(56) Documents cités:
**WO-A1-2008/005074       WO-A1-2008/062254
WO-A1-2015/197993       US-A1- 2007 175 215**

**EP 3 173 597 B1**

**Description**

La présente invention concerne les machines thermiques et plus particulièrement les moteurs à combustion interne à circuit de recirculation des gaz brûlés et turbocompresseur.

De nombreux moteurs à allumage par compression ou commandé équipant les véhicules automobiles sont équipés de turbocompresseurs pour augmenter la pression des gaz admis. Ces turbocompresseurs comportent un compresseur d'air entraîné par une turbine animée par la pression des gaz d'échappement.

L'invention s'intéresse plus particulièrement aux systèmes moteurs à recirculation des gaz d'échappement haute pression, dans lesquels une fraction des gaz d'échappement prélevée en amont de la turbine du turbocompresseur est mélangée aux gaz admis, après traversée d'une vanne de recirculation des gaz d'échappement RGE ou vanne EGR (pour exhaust gas recirculation selon la terminologie anglaise) créant une chute de pression. Une telle recirculation permet notamment de réduire la teneur en oxydes d'azote (NOx) des gaz d'échappement des moteurs.

Un des inconvénients d'une telle architecture provient du fait qu'une partie du débit enthalpique présent à l'échappement est dérivée et ne peut donc plus participer à l'entraînement de la turbine du turbocompresseur. Cette enthalpie dérivée est ensuite en partie dissipée dans la vanne RGE et dans l'éventuel échangeur thermique présent. Afin de récupérer à cette turbine la puissance requise par l'entraînement du compresseur avec un débit réduit, la pression à l'échappement est augmentée. Celle-ci augmente les pertes par pompage et donc la consommation de carburant du moteur. La publication US2007/0175215A1 décrit un système de recirculation des gaz d'échappement haute pression comprenant une turbine de récupération d'énergie dans la ligne EGR.

La demande internationale WO2008/062254A1 montre un moteur à combustion interne avec turbocompresseur. Le moteur comprend un système de recirculation des gaz d'échappement d'un point en amont de la turbine vers un point en amont du compresseur. Une turbine de récupération d'énergie est prévue dans cette ligne EGR et est couplée au turbocompresseur par une liaison rigide.

La présente invention a donc pour objet de pallier un ou plusieurs des inconvénients des dispositifs de l'art antérieur en proposant un ensemble moteur permettant de réduire la pression à l'échappement et ainsi la consommation de carburant.

Pour cela la présente invention propose un système moteur à circuit de recirculation haute pression des gaz brûlés selon la revendication 1. La turbine de récupération d'énergie permet de récupérer l'enthalpie normalement perdue dans le circuit de recirculation.

Selon un mode de réalisation de l'invention, le système de découplage est un embrayage.

Selon un mode de réalisation de l'invention, le système de découplage est une roue libre.

Selon un mode de réalisation de l'invention, le circuit de recirculation comporte un refroidisseur en aval ou en amont du système de récupération d'énergie.

Selon un mode de réalisation de l'invention, le système comporte une vanne en aval du système de récupération d'énergie.

Selon un mode de réalisation de l'invention, le système le moteur thermique est un moteur à allumage par compression ou commandé.

L'invention concerne également un véhicule, notamment automobile, équipé d'un système moteur tel que défini selon l'invention.

D'autres buts, caractéristiques et avantages de l'invention seront mieux compris et apparaîtront plus clairement à la lecture de la description faite, ci-après, en se référant aux figures annexées, données à titre d'exemple et dans lesquelles:

-   la figure 1 représente une architecture moteur avec un système de récupération d'énergie selon un premier mode de réalisation de l'invention,
-   la figure 2 est une représentation schématique du système de récupération d'énergie de l'invention,
-   la figure 3 illustre le gain potentiel en consommation avec le système selon l'invention.

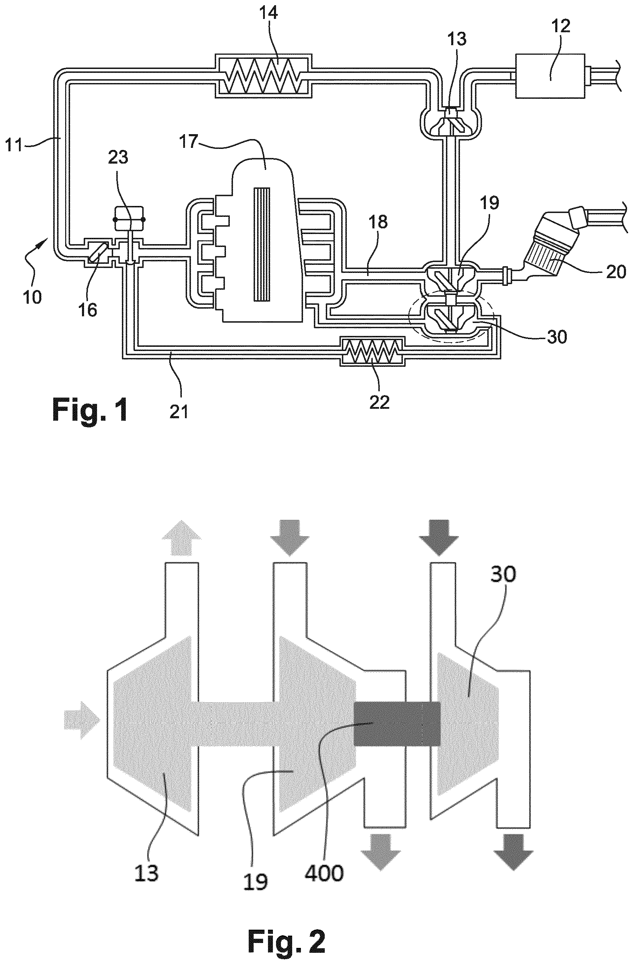

L'architecture représentée à la figure 1, encore appelée système moteur, comporte selon un mode de réalisation, un moteur thermique à combustion interne 17 à allumage par compression ou commandé, par exemple diesel ou essence ou autre, relié à un circuit 11 d'admission d'air dans le moteur, comportant un filtre à air 12 en entrée, un compresseur 13 de turbocompresseur pour comprimer l'air destiné au moteur et un refroidisseur 14 en aval du compresseur 13, pour refroidir l'air de suralimentation.

Selon un mode de réalisation de l'invention, un dispositif de réglage de débit 16, tel que par exemple une vanne papillon, permet de contrôler le débit d'air admis dans le moteur à combustion interne 17. Ce dernier est relié à un circuit d'échappement 18 qui comporte une turbine 19 de turbocompresseur, entraînée par les gaz d'échappement, accouplée au compresseur 13 de suralimentation pour l'entraîner en rotation.

Selon un mode de réalisation de l'invention, le couplage entre la turbine 19 du compresseur et le compresseur

2

13 est mécanique ou électrique.

Le circuit d'échappement 18 comporte également, en aval de la turbine 19, un dispositif 20 de traitement des gaz brûlés.

Un circuit 21 de recirculation des gaz brulés haute pression, muni par exemple d'un refroidisseur 22, capte une partie des gaz brûlés, en amont de la turbine 19, pour les réinjecter avec un débit contrôlé dans le moteur 17, par l'intermédiaire d'une vanne 23 dite vanne de recirculation des gaz d'échappement RGE ou vanne EGR (pour exhaust gas recirculation selon la terminologie anglaise) qui crée une perte de charge suffisante.

Dans le cadre de l'invention, le circuit 21 de recirculation comporte un système 30 de récupération d'énergie couplé à la turbine 19 du turbocompresseur.

Selon l'invention, ce système 30 de récupération d'énergie est une turbine 30 de récupération d'énergie. La turbine 30 de récupération d'énergie permet de récupérer l'enthalpie normalement perdue dans le circuit 21 de recirculation par la perte de charge dans la vanne RGE.

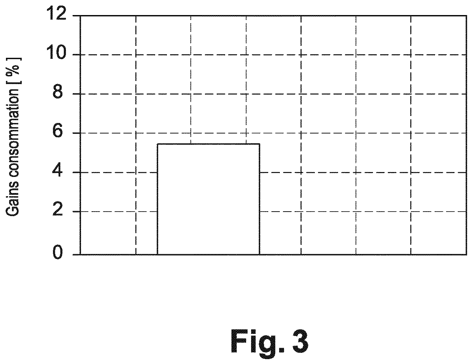

La puissance nécessaire à l'entraînement du compresseur restant pratiquement inchangée, de même que le débit et la température des gaz traversant la turbine du turbocompresseur, l'apport de puissance sur l'arbre du turbocompresseur permet de diminuer le rapport de détente au niveau de la turbine du turbocompresseur, donc la pression à l'échappement. Par conséquent, les pertes par pompage sont réduite et donc la consommation de carburant du moteur. Le gain apporté par le système de récupération d'énergie en consommation de carburant est illustré sur la figure 3 pour un véhicule diesel à vitesse stabilisée de 130km/h. Selon un mode de réalisation non revendiqué, le couplage entre la turbine 19 du turbocompresseur et la turbine 30 de récupération d'énergie est réalisé par une liaison rigide 400 illustrée figure 2.

Selon l'invention, l'ensemble comporte un système permettant de découpler la turbine 30 de récupération d'énergie, par exemple lors des phases de fonctionnement nécessitant un accroissement rapide de la vitesse de rotation du turbocompresseur, et par exemple une forte accélération.

Selon un mode de réalisation de l'invention, le système de découplage est un embrayage. Plus précisément, en fonctionnement normal avec récupération, l'embrayage est fermé, assurant la liaison entre les deux turbines, donc l'assistance du turbocompresseur. Pr exemple, pour la montée en régime du turbocompresseur, l'embrayage est ouvert, afin de limiter l'inertie à accélérer. Cette solution offre une grande liberté en terme de pilotage du système.

Selon un autre mode de réalisation de l'invention, le système de découplage est une roue libre. Dans les phases de fonctionnement où la turbine de récupération présente un intérêt, celle-ci est entraînée par les gaz d'échappement et la roue libre se bloque, assurant l'assistance du turbocompresseur. Lors des phases de montée en vitesse du turbocompresseur, l'assistance se maintient automatiquement tant que la puissance récupérée au niveau de la turbine additionnelle tend à lui conférer une accélération supérieure à celle du turbocompresseur. Dans le cas contraire, la roue libre laisse la turbine de récupération tourner librement, ce qui évite que son inertie ne freine la montée en vitesse du turbocompresseur. Ce système s'autorégule et ne nécessite pas d'actionneur additionnel.

Ainsi, la solution proposée avec un système de découplage, assure non seulement que le temps de réponse de la boucle d'air n'est pas supérieur au cas de référence, mais peut même, dans certaines phases de fonctionnement, participer à sa réduction.

Le potentiel de récupération d'énergie d'un tel système selon l'invention peut s'écrire de la façon suivante :

$$W_r = \eta_r Q_{egr} T_{ut} c p_{ut} \left\{ 1 - \left( \frac{P_{ur}}{P_{dr}} \right)^{\frac{1-\gamma}{\gamma}} \right\}$$

La dynamique de montée en vitesse du turbocompresseur d'un tel système selon l'invention peut s'écrire de la façon suivante :

Dans le cas de l'architecture de référence, la dynamique de vitesse du turbocompresseur:

$$J_t \frac{d\omega_{t,0}}{dt} \times \omega_{t,0} = W_{t,0} - W_{c,0}$$

$$(1)$$

Avec le système de récupération, dans le cas d'une liaison rigide entre les deux turbines:

$$(J_t + J_r)\frac{d\omega_t}{dt} \times \omega_t = WP_r + W_{t,0} - WP_{c,0}$$

$$(2)$$

Si $J_r \frac{d\omega_{t,0}}{dt} \times \omega_{t,0} > WP_r$ (3), on s'expose à une augmentation du temps de montée en vitesse du turbocompresseur par rapport au cas de référence.

Dans le cas d'un couplage par embrayage ou par roue libre :

Si la condition (3) se trouve vérifiée les deux turbines sont désaccouplées et l'on retrouve la dynamique de référence donnée par l'équation (1).

Dans le cas contraire, les turbines sont accouplées. La turbine de récupération contribue à la relance du turbocompresseur.

Comme $J_r \frac{d\omega_{t,0}}{dt} \times \omega_{t,0} \leq W_r$ ,, $\frac{d\omega_t}{dt} \geq \frac{d\omega_{t,0}}{dt}$ : la montée en vitesse du turbocompresseur est plus rapide.

Avec

cp : capacité calorifique des gaz à pression constante

$J$ : inertie

$Q$ : débit massique

$P_u$ : pression en amont de l'élément considéré

$P_d$ : pression en aval de l'élément considéré

$W_c$ : puissance mécanique du compresseur du turbocompresseur

$W_t$ : puissance mécanique de la turbine du turbocompresseur

$W_r$ : puissance mécanique de la turbine de la turbine de récupération

$\eta$ : rendement isentropique

$\omega$ : vitesse de rotation

$X_t$ : turbine du turbocompresseur

$X_r$ : turbine de récupération

$X_0$ : configuration de référence

$t$ : temps,

Xegr : circuit de recirculation

$\gamma$ : indice adiabatique du gaz considéré

L'invention s'applique à un moteur de véhicule terrestre, naval ou aérien, ainsi qu'aux moteurs de groupes électrogènes et à toutes autres applications utilisant un moteur thermique à turbocompresseur et recirculation haute pression des gaz brûlés.

La portée de la présente invention ne se limite pas aux détails donnés ci-dessus et permet des modes de réalisation sous de nombreuses autres formes spécifiques sans s'éloigner du domaine d'application de l'invention. Par conséquent, les présents modes de réalisation doivent être considérés à titre d'illustration, et peuvent être modifiés sans toutefois sortir de la portée définie par les revendications.

**EP 3 173 597 B1**

**Revendications**

1. Système moteur (10) à circuit (21) de recirculation haute pression des gaz brulés, comportant un moteur thermique équipé d'un circuit (18) d'échappement disposé en sortie du moteur thermique (17), un turbocompresseur comportant une turbine de turbocompresseur (19) disposée sur le circuit d'échappement (18), dans lequel le circuit (21) de recirculation comporte un système (30) de récupération d'énergie recevant les gaz d'échappement à haute pression en amont du turbocompresseur, le système de récupération d'énergie étant une turbine (30) couplée à la turbine (19) du turbocompresseur et le système moteur comportant un système de découplage du système (30) de récupération d'énergie.

2. Système moteur selon la revendication 1, dans lequel le système de découplage est un embrayage.

3. Système moteur selon la revendication 1, dans lequel le système de découplage est une roue libre.

4. Système moteur selon une des revendications 1 à 3, dans lequel le circuit de recirculation (21) comporte un refroidisseur (14) en aval ou en amont du système (30) de récupération d'énergie.

5. Système moteur selon une des revendications 1 à 4, comportant une vanne en aval du système (30) de récupération d'énergie.

6. Système moteur selon l'une quelconque des revendications 1 à 5, le moteur thermique (17) étant un moteur à allumage par compression ou commandé.

7. Véhicule, notamment automobile, équipé d'un système moteur (10) tel que défini à l'une quelconque des revendications 1 à 6.


**Patentansprüche**

1. Motorsystem (10) mit einem Hochdruckabgasrückführungskreislauf (21), umfassend einen Verbrennungsmotor, der mit einem Abgasstrang (18) am Ausgang des Verbrennungsmotors (17) ausgestattet ist, einen Turbolader, der eine Turboladerturbine (19) umfasst, die am Abgasstrang (18) angeordnet ist, wobei der Rückführungskreislauf (21) ein System (30) zur Rückgewinnung von Energie umfasst, das die Hochdruckabgasemissionen stromaufwärts des Turboladers empfängt, wobei das Energierückgewinnungssystem eine Turbine (30) ist, die mit der Turbine (19) des Turboladers gekoppelt ist, und das Motorsystem ein System zur Entkopplung des Energierückgewinnungssystems (30) umfasst.

2. Motorsystem nach Anspruch 1, wobei das Entkopplungssystem eine Kupplung ist.

3. Motorsystem nach Anspruch 1, wobei das Entkopplungssystem ein Freilauf ist.

4. Motorsystem nach einem der Ansprüche 1 bis 3, wobei der Rückführungskreislauf (21) stromabwärts oder stromaufwärts des Energierückgewinnungssystems (30) einen Kühler (14) umfasst.

5. Motorsystem nach einem der Ansprüche 1 bis 4, das stromabwärts des Energierückgewinnungssystems (30) ein Ventil umfasst.

6. Motorsystem nach einem der Ansprüche 1 bis 5, wobei der Verbrennungsmotor (17) ein Selbstzündungsmotor oder ein Fremdzündungsmotor ist.

7. Fahrzeug, insbesondere Automobil, das mit einem Motorsystem (10) wie in einem der Ansprüche 1 bis 6 definiert ausgestattet ist.


**Claims**

1. Motor system (10) with high-pressure exhaust gas recirculation circuit (21), comprising a heat engine equipped with an exhaust circuit (18) arranged at the output of the heat engine (17), a turbocompressor comprising a turbocompressor turbine (19) arranged on the exhaust circuit (18), in which the recirculation circuit (21) comprises an energy recovery system (30) receiving the exhaust gases at high pressure upstream of the turbocompressor, the energy recovery system being a turbine (30) coupled to the turbine (19) of the turbocompressor and the motor system comprising a system for decoupling the energy recovery system (30).

2. Motor system according to Claim 1, in which the decoupling system is a clutch.

3. Motor system according to Claim 1, in which the decoupling system is a freewheel.

4. Motor system according to one of Claims 1 to 3, in which the recirculation circuit (21) comprises a cooler (14) downstream or upstream of the energy recovery system (30).

5. Motor system according to one of Claims 1 to 4, comprising a valve downstream of the energy recovery system (30).

6. Motor system according to any one of Claims 1 to 5, the heat engine (17) being a compression or controlled ignition engine.

7. Vehicle, notably a motor vehicle, equipped with a motor system (10) as defined in any one of Claims 1 to 6.

**Fig. 1**

**Fig. 2**

**Fig. 3**

**RÉFÉRENCES CITÉES DANS LA DESCRIPTION**

**Documents brevets cités dans la description**

- US 20070175215 A1
- WO 2008062254 A1